(19) Europäisches Patentamt
European Patent Office
Office européen des brevets

(11) **EP 4 714 251 A1**

(12) **EUROPÄISCHE PATENTANMELDUNG**

(43) Veröffentlichungstag:
25.03.2026  Patentblatt 2026/13

(21) Anmeldenummer: 25193743.9

(22) Anmeldetag: 04.08.2025

(51) Internationale Patentklassifikation (IPC):
**A01D 41/127** (2006.01)  **A01F 7/06** (2006.01)

(52) Gemeinsame Patentklassifikation (CPC):
**A01D 41/1272; A01F 7/06**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **23.09.2024  DE 102024127437**

(71) Anmelder: **CLAAS Selbstfahrende Erntemaschinen GmbH**
**33428 Harsewinkel (DE)**

(72) Erfinder:
• **BARTHER, Marvin**
**33803 Steinhagen (DE)**
• **NEUFELD, Sergej**
**33098 Paderborn (DE)**
• **THIESMANN, Waldemar**
**49080 Osnabrück (DE)**
• **HÖGEMEIER, Christoph**
**49082 Osnabrück (DE)**
• **BORMANN, Bastian**
**33334 Gütersloh (DE)**
• **WITTE, Johann**
**58730 Fröndenberg (DE)**

(74) Vertreter: **CLAAS Gruppe**
**Mühlenwinkel 1**
**33428 Harsewinkel (DE)**

(54) **VERFAHREN ZUM BESTIMMEN EINER SENSORPOSITION IN EINEM ABSCHEIDEORGAN EINER ERNTEMASCHINE**

(57)  Die vorliegende Erfindung betrifft eine Verfahren (100) zum Bestimmen einer Sensorposition (SP) in einem Abscheideorgan (225) einer Erntemaschine (200), das Verfahren umfassend: Bereitstellen einer Abscheidefunktion (400) zum Ermitteln einer berechneten Abscheidung; und Bestimmen einer Sensorposition (SP) für zumindest einen Sensor zum Erfassen einer tatsächlichen Abscheidung, indem eine Position (Pmax) im Abscheideorgan (225) bestimmt wird, an der die Abscheidefunktion (400) eine maximale Sensitivität (Smax) aufweist. Des Weiteren betrifft die vorliegende Erfindung ein Sensorsystem (250) und eine Erntemaschine (200).

Fig. 4

EP 4 714 251 A1

**Beschreibung**

Die vorliegende Erfindung betrifft ein Verfahren zum Bestimmen einer Sensorposition in einem Abscheideorgan einer Erntemaschine. Ferner betrifft die vorliegende Erfindung ein Sensorsystem zum Erfassen von Messwerten in einem Abscheideorgan einer Erntemaschine. Des Weiteren betrifft die Erfindung eine Erntemaschine, umfassend ein Abscheideorgan und ein Sensorsystem.

Aus dem Stand der Technik ist es bekannt Abscheideorgane bzw. Abscheideeinrichtungen mit Sensoren zum Erfassen einer tatsächlichen Abscheidung auszurüsten.

Die EP 4 151 072 A1 betrifft eine Abscheideeinrichtung für einen Mähdrescher mit einer Sensoreinrichtung mit zumindest einem Kornsensor. Der Kornsensor ist derart innerhalb und/oder außerhalb des Abscheideaggregats angeordnet, dass eine mittels des Abscheideaggregats abgeschiedene Menge und/oder eine in dem im Zwischenraum geförderten Erntegut enthaltene Menge an Körnern zumindest entlang der Längsachse des Abscheideaggregats vom Einlaufbereich bis zum Auslaufbereich des Abscheideaggregats stellenweise bestimmbar ist, ohne den Erntegutstrom zu beeinträchtigen. Eine Verbesserung wäre, die Position des Sensors bzw. Kornsensors genau zu bestimmen.

Eine Aufgabe der vorliegenden Erfindung ist es daher, ein Verfahren zu entwickeln, das eine besonders effiziente Bestimmung der Sensorposition ermöglicht.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein Aspekt bezieht sich auf Verfahren zum Bestimmen einer Sensorposition in einem Abscheideorgan einer Erntemaschine. Das Verfahren kann dabei das Bereitstellen einer Abscheidefunktion zum Ermitteln einer berechneten Abscheidung umfassen. Ferner kann das Verfahren das Bestimmen einer Sensorposition für zumindest einen Sensor zum Erfassen einer tatsächlichen Abscheidung umfassen. Die Sensorposition kann bestimmt werden, indem eine Position im Abscheideorgan bestimmt wird, an der die Abscheidefunktion eine maximale Sensitivität aufweist.

Eine Erntemaschine kann eine landwirtschaftliche Arbeitsmaschine sein, die speziell für die Ernte von Nutzpflanzen vorgesehen ist. Es kann sich bei der Erntemaschine insbesondere um einen Mähdrescher mit einem Abscheideorgan handeln. Das Abscheideorgan kann zur Abscheidung von Erntegut eingerichtet sein. Im Abscheideorgan können Körner und nicht vollständig ausgedroschene Ähren vom Stroh getrennt werden. Das Abscheideorgan kann das Erntegut auch zumindest teilweise dreschen. Das Abscheideorgan kann ein Korbsegment (auch Korbbereich genannt) zur Abscheidung von Bestandteilen aus dem Erntegut aufweisen. Das Korbsegment bzw. der Korbbereich kann als Blechkorb, Drahtkorb oder Fingerkorb ausgebildet sein. Der Verlust der Erntemaschine kann sich auf eine Menge an Erntegut beziehen, die während des Einsatzes der Erntemaschine ungenutzt bleibt, beschädigt wird oder auf andere Weise verloren geht. Es kann sich bei dem Verlust insbesondere um einen Kornverlust handeln. Dabei kann es sein, dass der Verlust bzw. Kornverlust während der Abscheidung von Erntegut im Abscheideorgan entsteht.

Unter Abscheidung von Erntegut kann ein Abscheiden von Korn und Nicht-Kornbestandteilen, insbesondere Spreu und Stroh, des Erntegutes voneinander verstanden werden. Die Abscheidung mittels des Korbsegments kann insbesondere beim Abscheiden im Abscheideorgan erfolgen. Im Abscheideorgan können die Prozesse Entmischung und Trennung stattfinden. Entmischung kann auftreten, wenn sich die unterschiedlichen Bestandteile aufgrund ihrer physikalischen Eigenschaften während der Abscheidung im Abscheideorgan unterschiedlich verhalten. Zum Beispiel können schwerere Partikel schneller absinken, während leichtere Partikel weiter oben verbleiben. Entmischung kann ferner beschreiben, wie sich verschiedene Partikel aufgrund ihrer unterschiedlichen Eigenschaften auf dem Korbsegment anordnen oder ansammeln. Die Trennung kann sich auf einen Prozess beziehen, bei dem im Abscheideorgan Bestandteile des Erntegutc mittels des Korbsegments getrennt werden. Das abgeschiedene Erntegut (d.h. bspw. das Korn) kann nach der Abscheidung das Abscheideorgan verlassen und beispielsweise in einem Korntank gesammelt werden. Die Erntemaschine kann mindestens ein Abscheideorgan aufweisen. Es ist auch möglich, dass die Erntemaschine mehrere Abscheideorgane aufweist.

Die Abscheidefunktion kann ein mathematisches Modell oder eine mathematische Darstellung umfassen, die die Abscheidung (bspw. die Abscheideleistung oder die Menge an abgeschiedenem Erntegut) in Abhängigkeit vom Weg innerhalb eines Abscheideprozesses bzw. eines Abscheideorgans beschreibt. Die Abscheidefunktion kann Funktionsparameter (auch Koeffizienten genannt) umfassen, die den Verlauf der Abscheidefunktion bestimmen. Mittels der Abscheidefunktion kann eine theoretische bzw. berechnete Abscheidung an einer vorgegebenen Position bzw. Stelle im Abscheideorgan bestimmt werden. Die Abscheidefunktion kann einen Abscheidewert, Abscheidegrad und/oder Abscheideverlauf beschreiben bzw. bestimmen.

Mittels der Abscheidefunktion kann die (berechnete) Abscheidung von Erntegut entlang einer Förderrichtung des Abscheideorgans bestimmt werden, d.h. an jeder Stelle bzw. geometrischen Koordinate des Abscheideorgans kann das berechnete abgeschiedene Erntegut (bspw. Korn) bestimmt werden.

Der Sensor zum Erfassen einer tatsächlichen Abscheidung könnte möglicherweise so konzipiert sein, dass er dem Abscheideorgan in ihrem erntegutabscheidenden Bereich als Abscheidesensor zugeordnet ist. Der Sensor könnte beispielsweise ein Signal generieren, das der abgeschiedenen Erntegutmenge entspricht. Dieses Signal könnte dann zur Weiterverarbeitung an eine Auswerteeinheit übermittelt werden. Der Sensor könnte möglicherweise ein Kornsensor sein, der im Abscheideorgan eines Mähdreschers angeordnet ist.

Die Sensitivität kann eine Schwankung bzw. Variabilität einer Abscheiderate der Abscheidefunktion aufgrund von verschiedenen Faktoren sein. Die Sensitivität kann beschreiben, wie anfällig die Abscheiderate gegenüber verschiedenen Faktoren ist. Diese Faktoren könnten etwa Unterschiede im Materialfluss, Erntebedingungen oder andere betriebliche Bedingungen sein. Eine hohe Sensitivität bedeutet, dass kleine Änderungen in diesen Faktoren zu größeren Schwankungen in der Abscheiderate führen können.

Die maximale Sensitivität der Abscheidefunktion kann möglicherweise einem Punkt oder Bereich zugeordnet werden, an dem der Sensor die höchste Empfindlichkeit gegenüber Veränderungen in der Menge des abgeschiedenen Ernteguts zeigt. Mathematisch gesehen wäre dies beispielsweise der Punkt, an dem die Ableitung der Abscheidefunktion eine Nullstelle aufweist. Die maximale Sensitivität der Abscheidefunktion kann dem Punkt oder Bereich zugeordnet sein, an dem die Abscheidefunktion durch die Anpassung der vom Sensor erfassten Messwerte am stärksten beeinflusst werden kann. Die maximale Sensitivität der Abscheidefunktion kann auch als der Bereich definiert werden, in dem die Abscheidefunktion die größte Veränderung zeigt, wenn die Funktionsparameter bzw. Koeffizienten der Abscheidefunktion variieren. An dieser Stelle reagiert der Sensor womöglich am stärksten auf kleine Änderungen in der Abscheidemenge, was eine präzise und detaillierte Überwachung ermöglicht.

Das Verfahren kann mit anderen Worten ermöglichen, dass eine Sensorposition bestimmt wird, an der die (tatsächliche und/oder berechnete) Abscheidung des Abscheideorgans mittels des Sensors und der Abscheidefunktion besonders präzise und mit geringem Messrauschen bestimmt werden kann. Die Abscheidefunktion, die anhand der an der Sensorposition erfassten Messwerte angepasst wurde, kann besonders präzise Berechnungen der theoretischen Abscheidung ermöglichen. Dies könnte beispielsweise dazu beitragen, die Effizienz und Genauigkeit des Ernteprozesses zu verbessern, indem es sicherstellen kann, dass die Überwachung von Abscheideverlusten präzise und zuverlässig erfolgt. Mittels des an der Sensorposition angeordneten Sensors können Messdaten erfasst werden, die zur Anpassung der Abscheidefunktion im laufenden Betrieb der Erntemaschine verwendet werden. Die Abscheidefunktion kann zur Berechnung von Abscheideverlusten verwendet werden. Mit anderen Worten können die Abscheideverluste aufgrund der bestimmten Sensorposition besser bzw. genauer berechnet werden.

In einem weiteren Aspekt kann das Abscheideorgan einen Rotor und einen Rotormantel umfassen. Das Verfahren kann ferner ein Bereitstellen einer Messlinie umfassen, wobei die Messlinie auf dem Rotormantel des Abscheideorgans angeordnet ist. Des Weiteren kann das Verfahren ein Bestimmen der Sensorposition des zumindest einen Sensors umfassen. Die Sensorposition kann bestimmt werden, indem eine Position auf der Messlinie bestimmt wird, an der die Abscheidefunktion eine maximale Sensitivität aufweist.

Mittels des Rotors kann der Erntegutstrom in einer im Wesentlichen helixförmigen Bewegung gefördert werden. Dabei kann es sein, dass sich der Erntegutstrom gleichzeitig in zwei Richtungen bewegt. Der Erntegutstrom kann um eine Achse (bspw. die Hauptachse des Rotors bzw. die Rotorachse) drehen und sich gleichzeitig entlang dieser Achse bewegen, wodurch eine dreidimensionale spiralförmige Bahn entstehen kann. Durch schnelle Rotation des Rotors kann das Korn ausgeschleudert und durch Fliehkräfte vom Stroh getrennt werden. Der Rotormantel kann den Rotor umhüllen.

Die Messlinie kann eine definierte Linie oder Strecke sein, entlang derer Messungen vorgenommen werden können. Die Messlinie kann als Referenz oder Bezugspunkt dienen, auf dem ein Sensor zum Erfassen der tatsächlichen Abscheidung positioniert werden kann. Somit kann es sein, dass das Bestimmen der Sensorposition lediglich von einer Dimension, nämlich entlang der Messlinie, stattfindet. Mit anderen Worten kann das Bestimmen der Sensorposition auf eine Dimension entlang der Messlinie reduziert werden. Die Messlinie kann auf dem Rotormantel liegen, so dass dadurch festgelegt werden kann, dass auch der Sensor auf dem Rotormantel liegt. Durch die Positionierung des Sensors entlang der Messlinie an der Stelle mit maximaler Sensitivität könnten die Messungen wesentlich genauer erfolgen. Dadurch ließe sich der das Bestimmen der Sensorposition optimieren und effizienter gestalten.

In einem weiteren Aspekt kann der Rotor eine Rotorachse aufweisen und die Messlinie im Wesentlichen parallel zur Rotorachse angeordnet sein.

Wenn die Messlinie im Wesentlichen parallel zur Rotorachse verläuft, kann dies möglicherweise ein schnelleres Bestimmen der Sensorposition gewährleisten. Mit anderen Worten kann die Messlinie, die Rotorachse und die Förderrichtung des Abscheideorgans im Wesentlichen parallel zueinander angeordnet sein. Somit kann beispielsweise schrittweise entlang der Messlinie bzw. Rotorachse geprüft werden, an welcher Stelle die maximale Sensitivität vorliegt.

In einem weiteren Aspekt kann der Rotormantel eine Fallstufe aufweisen. Dabei kann das Verfahren ein Bestimmen einer Fallstufenposition ausgehend von der Sensorposition umfassen. Dabei kann die Fallstufenposition mittels einer Fallfunktion bestimmt werden, wobei die Fallfunktion aus der Abscheidefunktion ermittelt wird.

Die Fallstufe kann eine Vertiefung im Rotormantel darstellen, in die das Erntegut fallen kann. Dadurch kann das Erntegut optimal vom Sensor, der in der Fallstufe positionierbar ist, erfasst werden. Mit anderen Worten könnte die Fallstufe dafür sorgen, dass das Erntegut nicht am Sensor vorbeirutscht, sondern direkt auf diesen fällt und somit erfasst werden kann. Eine solche Anordnung könnte die Effizienz des gesamten Erntevorgangs steigern, indem Fehlmessungen minimiert würden und der Sensor weniger häufig nachjustiert werden müsste.

Die Fallstufenposition könnte die Position des Sensors in der Fallstufe sein. Die Fallfunktion könnte eine mathematische oder algorithmische Darstellung sein, die die optimale Position und Tiefe der Fallstufe im Rotormantel bestimmt. Die Fallfunktion könnte auf Basis der Abscheidefunktion abgeleitet werden, die das Verhalten und die Trennung des Ernteguts während des Prozesses beschreibt. Die Fallfunktion könnte berücksichtigen, wie das Erntegut durch die Zentrifugal- und Schwerkraftkräfte beeinflusst wird, um sicherzustellen, dass es effizient in die Fallstufe gelangt und vom Sensor erfasst wird. Ziel kann es sein, die Fallstufe bzw. die Fallstufenposition so zu gestalten, dass die Erfassung durch den Sensor maximiert und die Präzision der Messungen erhöht wird.

In einem weiteren Aspekt kann das Verfahren ein Bestimmen, ob die Sensorposition im Rotormantel oder außerhalb des Rotormantels liegt, umfassen.

Innerhalb des Rotormantels könnte bedeuten, dass sich der Sensor direkt im Bereich des Rotors befindet, wo das Erntegut durch die Zentrifugalbewegung bearbeitet wird. Hier könnte der Sensor in die Struktur des Rotormantels integriert sein und das Erntegut während der Rotation erfassen. Außerhalb des Rotormantels könnte bedeuten, dass der Sensor möglicherweise außerhalb der rotierenden Struktur positioniert ist. In diesem Fall könnte der Sensor das Erntegut erfassen, nachdem es den Rotormantel verlassen hat (d.h. nach der Trennung) oder durch Öffnungen im Mantel hindurch erfasst wird.

In einem weiteren Aspekt kann der Rotormantel ein Schutzgehäuse zum Schutz des Sensorsystems umfassen. Dabei kann ein Bestimmen der Sensorposition die Position des Schutzgehäuses berücksichtigen.

Das Schutzgehäuse kann speziell dazu dienen, das Sensorsystem vor mechanischen Schäden, Verschmutzung oder anderen äußeren Einflüssen zu schützen. Bei dem Schutzgehäuse kann es sich beispielsweise um ein Fallgitter handeln, dass die Fallstufe abdeckt. Das Fallgitter könnte die Funktion haben, das Erntegut zu führen und gleichzeitig den Sensor vor direkten Kontakt mit größeren Partikeln oder Fremdkörpern zu bewahren. Während das Erntegut durch das Fallgitter fällt, kann es möglicherweise dennoch vom Sensor erfasst werden, wodurch eine genaue Messung gewährleistet wird. Bei der Bestimmung der optimalen Sensorposition könnte es entscheidend sein, die Position und Struktur des Schutzgehäuses zu berücksichtigen. Der Sensor müsste möglicherweise so positioniert werden, dass er trotz des Schutzes durch das Schutzgehäuse präzise Messungen durchführen kann. Das kann bedeuten, dass der Abstand zwischen Sensor und Fallgitter sowie die Offenheit des Fallgitters so gestaltet sein sollte, dass sie die Sensorfunktion nicht beeinträchtigen.

In einem weiteren Aspekt kann das Verfahren ein Bestimmen einer Erntegutflusslinie im Abscheideorgan umfassen. Dabei kann Erntegut abschnittsweise entlang der Erntegutflusslinie abscheidbar sein. Ferner kann das Verfahren ein Bereitstellen der Abscheidefunktion basierend auf der Erntegutflusslinie umfassen. Des Weiteren kann das Verfahren ein Bestimmen der Sensorposition umfassen. Die Sensorposition kann bestimmt werden, indem eine Position auf der Erntegutflusslinie bestimmt wird, an der die Abscheidefunktion eine maximale Sensitivität aufweist.

Die Erntegutflusslinie kann den Weg oder die Route bezeichnen, die das Erntegut im Abscheideorgan durchläuft. Die Erntegutflusslinie kann ein Bereich sein, entlang dem Erntegut fließen kann. Die Erntegutflusslinie kann den gesamten Transportprozess des Ernteguts durch die verschiedenen mechanischen Komponenten des Abscheideorgans beschreiben. Es kann sich bei der Erntegutflusslinie mit anderen Worten um eine Linie handeln, auf dem sich der größte Teil des Ernteguts oder ein Schwerpunkt des Erntegutflusses bewegt. Die Erntegutflusslinie kann bestimmt werden, indem beispielsweise ein Eintritt des Ernteguts in das Abscheideorgan ermittelt wird und der weitere Verlauf des Erntegutflusses basierend auf den geometrischen und mechanischen Bedingungen im Abscheideorgan projiziert wird. Beispielsweise kann mittels der Geschwindigkeit und der Masse des Ernteguts beim Eintreten in das Abscheideorgan bestimmt werden, welche mechanischen Kräfte auf das Erntegut im weiteren Verlauf durch das Abscheideorgan auftreten. Somit kann ferner bestimmt werden, an welchen geometrischen Punkten sich das Erntegut bzw. ein Großteil des Ernteguts im Abscheideorgan zu bestimmten Zeitpunkten befinden wird. Basierend auf diesen geometrischen Punkten kann eine Projektionslinie bzw. eine Erntegutflusslinie ermittelt werden. An jedem Punkt der Erntegutflusslinie kann möglicherweise ein Wert für die Abscheidung und zusammenfassend somit ein Abscheideverlauf bestimmt werden.

Ein weiterer Aspekt bezieht sich auf ein Sensorsystem zum Erfassen von Messwerten in einem Abscheideorgan einer Erntemaschine. Das Sensorsystem kann zumindest einen Sensor umfassen, wobei die Sensorposition des zumindest einen Sensors nach einem der vorhergehenden Aspekte bestimmbar ist.

Ein weiterer Aspekt bezieht sich auf eine Erntemaschine, wobei die Erntemaschine ein Abscheideorgan und ein Sensorsystem nach einem der vorhergehenden Aspekte umfassen kann.

Des Weiteren kann die Erntemaschine eine Auswerteeinheit umfassen. Die Auswerteeinheit kann dazu vorgesehen und eingerichtet sein, ein hierin beschriebenes Verfahren ganz oder teilweise auszuführen.

In einem weiteren Aspekt kann das Abscheideorgan einen Rotor und einen Rotormantel umfassen. Ferner kann der Rotormantel eine Fallstufe umfassen. Dabei kann der Rotormantel ein Schutzgehäuse zum Schutz des Sensorsystems umfassen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Für den Fachmann ist ersichtlich, dass die vorgestellten Verfahren in Form von Anweisungen in Software oder auf einem Computerprogrammprodukt implementiert oder gespeichert sein können, wobei gespeicherte Anweisungen es ermöglichen, die Schritte nach dem Verfahren auszuführen, wenn eine entsprechende datenverarbeitende Maschine durch die Software gesteuert wird. Mit anderen Worten ist es möglich, dass es sich bei den Verfahren um computer-implementierte Verfahren handelt. Das heißt, es ist möglich, dass sich ein Aspekt auf ein computer-implementiertes Verfahren zum Bestimmen eines Verlusts einer Erntemaschine bezieht. Dabei können die Verfahrensschritte teilweise oder vollständig Bestandteil des computer-implementierten Verfahrens sein. Ausführungsformen beziehen sich daher auch auf ein Speichermedium mit darauf gespeicherter Software, die ausgebildet ist, um die vorgestellten Verfahren durchzuführen, wenn die Software auf einer datenverarbeitenden Einrichtung ausgeführt wird. Das Verfahren kann offline und/oder onboard (d.h. embedded und in Echtzeit) durchgeführt werden.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigt:

Fig. 1 eine schematische Darstellung eines Verfahrens zum Bestimmen einer Sensorposition in einem Abscheideorgan einer Erntemaschine gemäß einer Ausführungsform;

Fig. 2 eine schematische Darstellung einer Erntemaschine gemäß einer Ausführungsform;

Fig. 3 Abscheideorgan der Erntemaschine in einer perspektivischen Ansicht gemäß einer Ausführungsform;

Fig. 4 Abscheidefunktion gemäß einer Ausführungsform; und

Fig. 5 Sensorsystem zum Erfassen von Messwerten in einem Abscheideorgan einer Erntemaschine gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt eine Offenbarung eines beschriebenen Verfahrens auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

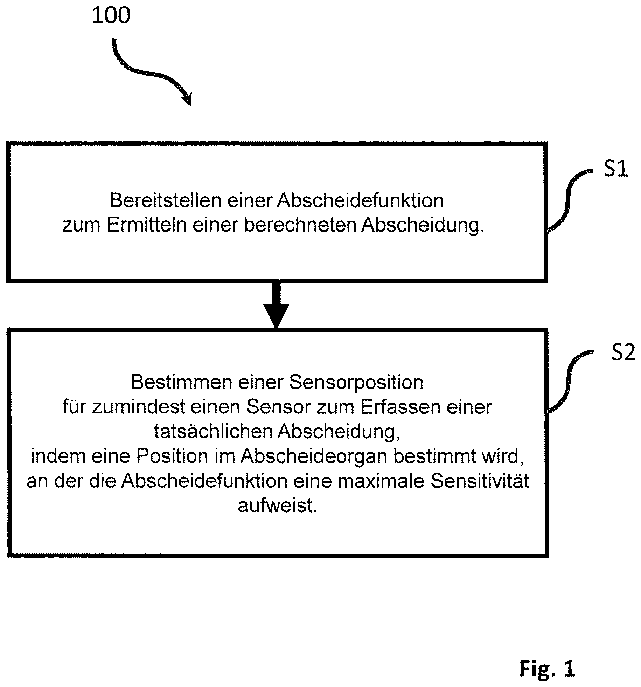

Fig. 1 zeigt eine schematische Darstellung eines Verfahrens 100 zum Bestimmen einer Sensorposition in einem Abscheideorgan einer Erntemaschine gemäß einer Ausführungsform.

In einem Schritt S1 des Verfahrens kann eine Abscheidefunktion zum Ermitteln einer berechneten Abscheidung bereitgestellt werden. In einem weiteren Schritt S2 kann eine Sensorposition für zumindest einen Sensor zum Erfassen einer tatsächlichen Abscheidung bestimmt werden, indem eine Position im Abscheideorgan bestimmt wird, an der die Abscheidefunktion eine maximale Sensitivität aufweist. Der Schritt S2 kann alternativ erweitert werden.

In einer ersten Alternative kann in einem Schritt eine Messlinie bereitgestellt werden, wobei die Messlinie auf dem Rotormantel des Abscheideorgans angeordnet ist. Daraufhin kann in einem weiteren Schritt die Sensorposition des zumindest einen Sensors bestimmt werden, indem eine Position auf der Messlinie bestimmt wird, an der die Abscheidefunktion eine maximale Sensitivität aufweist.

In einer zweiten Alternative kann in einem Schritt eine Erntegutflusslinie im Abscheideorgan bestimmt werden, wobei Erntegut abschnittsweise entlang der Erntegutflusslinie abscheidbar ist. Anschließend kann die Abscheidefunktion basierend auf der Erntegutflusslinie bereitgestellt werden. Ferner kann daraufhin die Sensorposition bestimmt werden, indem eine Position auf der Erntegutflusslinie bestimmt wird, an der die Abscheidefunktion eine maximale Sensitivität aufweist.

Alternativ kann während des Schritt S2 bestimmt werden, ob die Sensorposition im Rotormantel oder außerhalb des Rotormantels liegt.

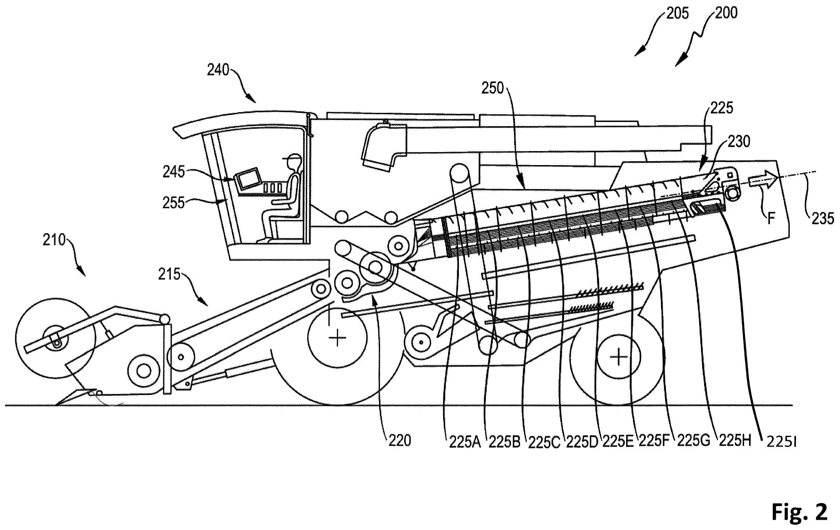

Fig. 2 zeigt eine schematische Darstellung einer Erntemaschine 200 gemäß einer Ausführungsform. Die Erntemaschine 200 ist dabei als Mähdrescher 205 ausgebildet.

Der Mähdrescher 205 kann in seinem frontseitigen Bereich ein als Schneidwerk ausgebildetes Vorsatzgerät 210 aufnehmen, welches in an sich bekannterweise mit einem Schrägförderer 215 des Mähdreschers 205 verbunden ist. Ein den Schrägförderer 215 durchlaufender Erntegutstrom kann von dem Schrägförderer 215 an eine Dreschvorrichtung 220 des Mähdreschers übergeben werden. Von der Dreschvorrichtung 220 wird ein austretender Teilgutstrom des Erntegutstroms, der im Wesentlichen Nichtkornbestandteile wie Spreu und Stroh enthält, an ein Abscheideorgan 225 übergeben. Ein weiterer Teilgutstrom, der im Wesentlichen aus dem Erntegut abgeschiedene Körner enthält, gelangt von der Dreschvorrichtung 220 auf einen Förderboden.

Das Abscheideorgan 225 weist einen Rotor 230 auf. Mittels des Rotors 230 kann Erntegut in eine Förderrichtung F entlang einer Rotorachse 235 bzw. Hauptachse des Rotors 230 gefördert werden. Ferner kann der Erntegutstrom mittels des Rotors 230 im Wesentlichen helixförmig bewegbar sein.

Vom Abscheideorgan 225 kann der Teilgutstrom des Erntegutsstroms so gefördert werden, dass in dem Teilgutstrom enthaltene freibewegliche Körner im untenseitigen Bereich des Abscheideorgans 225 abgeschieden werden. Sowohl die von der Dreschvorrichtung 220 als auch durch das Abscheideorgan 225 aus dem Erntegutstrom abgeschiedenen Körner werden über einen Rücklaufboden und Förderboden einer Reinigungsvorrichtung zugeführt. Von der Reinigungsvorrichtung gelangt ein gereinigter Körnerstrom schließlich mittels einer Fördervorrichtung in einen Korntank des Mähdreschers 205.

Weiter verfügt der Mähdrescher 205 über eine Fahrerkabine 240, in der zumindest eine grafische Benutzerschnittstelle 245 angeordnet ist, welche an ein Bussystem des Mähdreschers 205 angeschlossen ist. Ein Fahrerassistenzsystem kommuniziert durch das Bussystem in an sich bekannter Weise mit der grafischen Benutzerschnittstelle 245.

Der Mähdrescher 205 umfasst ferner ein Sensorsystem 250 zum Erfassen von Messwerten im Abscheideorgan 225 und eine Auswerteeinheit 255. Das Sensorsystem 250 kann insbesondere einen Abscheideverlustsensor, einen Reinigungsverlustsensor, einen Bruchkornsensor und/oder einen Ausdruschverlustsensor umfassen. Die Auswerteeinheit 255 kann dazu vorgesehen und eingerichtet sein, die Messwerte des Sensorsystems 250 weiterzuverarbeiten.

Das Abscheideorgan 225 ist beispielsweise in mehrere Abscheidezonen 225A bis 225I unterteilt. Das Sensorsystem 250 weist zum Erfassen von Messwerten einen Sensor in zumindest einer Abscheidezone 225A bis 225I auf. Der Sensor kann beispielsweise durch das Abscheideorgan 225 aus dem Erntegutstrom abgeschiedenen Körner erfassen.

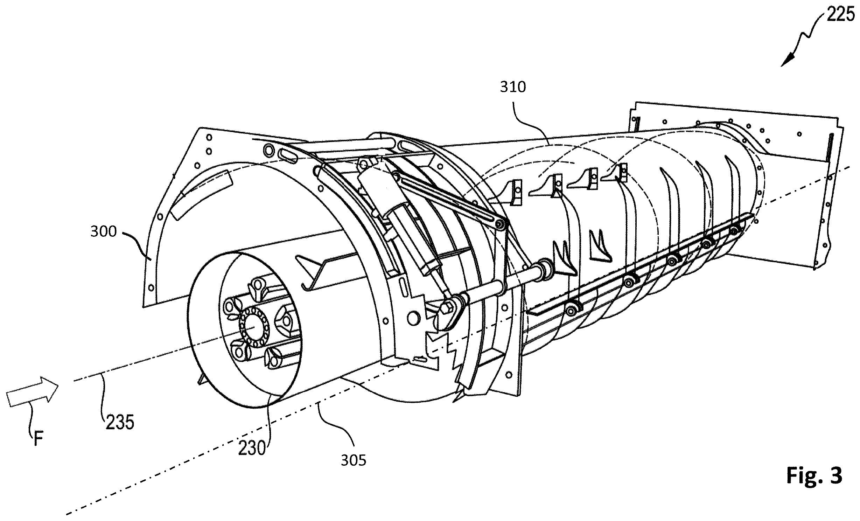

Fig. 3 zeigt das Abscheideorgan 225 der Erntemaschine 100 in einer perspektivischen Ansicht gemäß einer Ausführungsform.

Erntegut kann mittels des Rotors 230 entlang einer Förderrichtung F, die parallel zu einer Hauptachse bzw. Rotorachse 235 des Rotors 230 verläuft, gefördert werden. Das Erntegut bzw. ein Schwerpunkt des Ernteguts kann dabei eine im Wesentlichen helixförmige Bewegung durchlaufen, d.h. eine Bewegung, die entlang einer Spiralbahn verläuft.

Der Rotor 230 wird von einem Rotormantel 300 umhüllt. Der Rotormantel 300 weist einen Mantelumfang und eine Mantellänge auf. Ein Korbbereich kann einen Teil des Rotormantels 300 bilden. Im Korbbereich können Bestandteilen aus dem Erntegut nach unten ausgeschieden werden. Das Korbsegment bzw. der Korbbereich kann als Blechkorb, Drahtkorb oder Fingerkorb ausgebildet sein
Die Messlinie 305 ist im Wesentlichen parallel zur Rotorachse 235 angeordnet. Des Weiteren ist die Messlinie 305 auf dem Rotormantel 300 des Abscheideorgans 225 angeordnet. Zumindest ein Sensor kann an derjenigen Position auf der Messlinie 305 angeordnet werden, an der die Abscheidefunktion eine maximale Sensitivität aufweist. Die Erntegutflusslinie 310 kann aus einer im Wesentlichen helixförmigen Bewegung des mittels des Rotors 230 geförderten Erntegutstroms ermittelt werden. Die Erntegutflusslinie 310 kann einer schmalen Spur durch das Abscheideorgan 225 entsprechen. Es kann eine Abscheidefunktion bereitgestellt werden, die auf der Erntegutflusslinie 310 basiert, d.h. die Abscheidefunktion kann die berechnete Abscheidung entlang der Erntegutflusslinie 310 beschreiben. Eine Sensorposition kann diejenige Position auf der Erntegutflusslinie 310 sein, an der die Abscheidefunktion eine maximale Sensitivität aufweist.

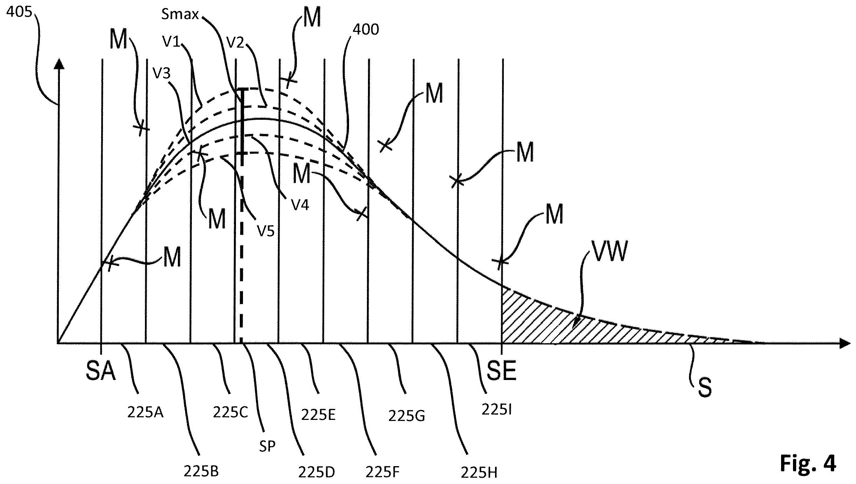

Fig. 4 zeigt die Abscheidefunktion 400 gemäß einer Ausführungsform. Die Abscheidefunktion 400 kann ein in Abhängigkeit von Materialeigenschaften und Maschineneinstellungen der Erntemaschine 100 exponentielles Verhalten zeigen, das mit unendlichem Abscheideweg s gegen Null läuft. Mittels der (eindimensionalen) Abscheidefunktion 400 kann beispielsweise eine Abscheiderate bzw. Kornrate 405 an einer Stelle des Abscheidewegs s bestimmt bzw. berechnet werden. Der Abscheideweg s kann dabei der Messlinie 305 entsprechen. Demnach kann die Abscheidefunktion 400 die Abscheidung für jede der Abscheidezonen 225A bis 225I des Abscheideorgans 225 bestimmen.

Die Abscheidefunktion 400 kann basierend auf einem analytischen Ansatz aus zwei exponentiellen Funktionen zur Beschreibung der Abscheidung in einer Dimension (d.h. des Abscheidewegs s) gebildet werden. Dabei können die beiden Prozesse Entmischung der Körner (Prozess A) und Trennung der Körner (Prozess B) auftreten, die beide mit exponentiellem Verhalten in Trennstrecke definiert wurden. Mit der Restkornfunktion R(s), die den restlichen Anteil an Körnern in beiden Prozessen zusammen zum Abscheideweg s beschreibt, und der Abscheidefunktion Z(s), die die aktuelle Abscheide-Kornrate beschreibt, sind die Funktionen wie folgt aufgestellt:

$$R(s) = \frac{1}{B-A}(Be^{-As} - Ae^{-Bs})$$

$$Z(s) = \frac{\partial\, 1 - R(s)}{\partial\, s} = \frac{AB}{B-A}(e^{-As} - e^{-Bs})$$

Die Trennkoeffizienten A und B können dabei die entsprechende Entmischungsstärke (Prozess A) und die Trennungsstärke (Prozess B) beschreiben. Dabei wird davon ausgegangen, dass sich zu Beginn der Abscheidung alle Körner im Prozess A befinden und zunächst entmischt werden müssen. Es ist möglich, dass das Sensorsystem 250 die Messwerte M_Betrieb im Abscheideorgan 225 während des Betriebs der Erntemaschine 100 erfasst. Basierend auf den Messwerten M_Betrieb können Koeffizienten der Abscheidefunktion 400 ermittelt werden. Beispielsweise können die Trennkoeffizienten A und B mittels der Methode der kleinsten Fehlerquadrate ermittelt werden.

Mittels der Abscheidefunktion 400 kann eine Sensorposition SP für zumindest einen Sensor zum Erfassen einer tatsächlichen (bzw. gemessene) Abscheidung im Abscheideorgan 225 bestimmt werden. Dabei wird üblicherweise diejenige Position Pmax der Abscheidefunktion 400 ermittelt, an der die Abscheidefunktion 400 eine maximale Sensitivität Smax aufweist.

Die maximale Sensitivität Smax der Abscheidefunktion 400 kann einem Punkt Pmax (oder Bereich) zugeordnet sein, an dem die Abscheidefunktion 400 durch die Anpassung der vom Sensor erfassten Messwerte am stärksten beeinflusst werden kann. Dazu kann mittels Testversuche die Sensorposition SP des Sensors bestimmt werden. Wird die Abscheidefunktion 400 beispielsweise an die Messwerte M, die bei einem Testversuch von verschiedenen Testsensoren ermittelt wurden, angepasst, kann die Form der Abscheidefunktion 400 je nach Messwerte M unterschiedlich ausfallen. In einem ersten Fall kann die Abscheidefunktion 400 einen ersten Verlauf V1 haben. Werden anderen Messwerte M verwendet, kann die Abscheidefunktion 400 die Verläufe V2 bis V5 aufweisen. Aufgrund der verschiedenen Verläufe V1 bis V5 kann somit an einer Position Pmax der Abscheidefunktion 400 eine Schwankung bzw. Variabilität der Abscheiderate 405 entstehen.

Diese Variabilität der Abscheidefunktion 400 kann als Sensitivität bezeichnet werden. Da die Sensitivität an dieser Position Pmax verglichen zu den anderen Positionen besonders hoch ausfällt, kann die Sensitivität als maximale Sensitivität Smax bezeichnet werden. Mit anderen Worten reagiert die Abscheidefunktion 400 auf die Anpassung an die Messwerte an dieser Stelle bzw. Position Pmax mit einer maximalen Sensitivität Smax bzw. besonders empfindlich. Die maximale Sensitivität Smax der Abscheidefunktion 400 kann auch ermittelt werden, indem die Koeffizienten der Abscheidefunktion 400 (bspw. Trennkoeffizienten A und B) variiert werden.

Die Position Pmax kann verwendet werden, um die Sensorposition SP zu bestimmen. Im einfachsten Fall entspricht die Sensorposition SP der Position Pmax. Im vorliegenden Fall wurde eine Sensorposition SP bestimmt, die in der Abscheidezone 225D des Abscheideorgans 225 liegt. An der Sensorposition SP reagiert der Sensor womöglich am stärksten auf kleine Änderungen in der Abscheiderate, was eine präzise und detaillierte Überwachung ermöglicht.

Das Verfahren kann mit anderen Worten ermöglichen, dass die Sensorposition SP bestimmt wird, an der die berechnete Abscheidung des Abscheideorgans 225 mittels der Abscheidefunktion 400 besonders präzise bestimmt werden kann. Die Abscheidefunktion 400, die anhand der an der Sensorposition SP erfassten Messwerte angepasst wurde, kann besonders präzise Berechnungen der theoretischen Abscheidung bzw Abscheiderate 405 ermöglichen. Dies könnte beispielsweise dazu beitragen, die Effizienz und Genauigkeit des Ernteprozesses zu verbessern, indem es sicherstellen kann, dass die Überwachung von Abscheideverlusten präzise und zuverlässig erfolgt. Mittels des an der Sensorposition SP angeordneten Sensors können Messdaten erfasst werden, die zur Anpassung der Abscheidefunktion 400 im laufenden Betrieb der Erntemaschine 100 verwendet werden.

Es ist möglich, dass in einem Schritt die Abscheidefunktion 400 über einen vom Abscheideorgan 225 definierten Bereich hinaus erweitert wird, um den Abscheideverlust zu bestimmen. Das heißt, die Abscheidefunktion 400 kann über einen vom Abscheideorgan 225 definierten Bereich, beispielsweise über ein Abscheideende SE hinaus, extrapoliert werden. Ferner kann das zum Bestimmen des Verlusts ein Verlustwert VW mittels des erweiterten Bereichs der Abscheidefunktion 400 ermittelt werden. Dabei kann mittels des Integrals der Abscheidefunktion 400 ab dem Abscheideende SE bis ins Unendliche einen Verlustfläche gebildet werden. Mit anderen Worten können die Kornverluste das Integral über die Kornverluste der einzelnen Abscheidespuren über die Breite der Abscheidefläche am Ende der Abscheidung sein. Es ist möglich, dass die Abscheideverluste aufgrund der bestimmten Sensorposition SP besser bzw. genauer berechnet werden.

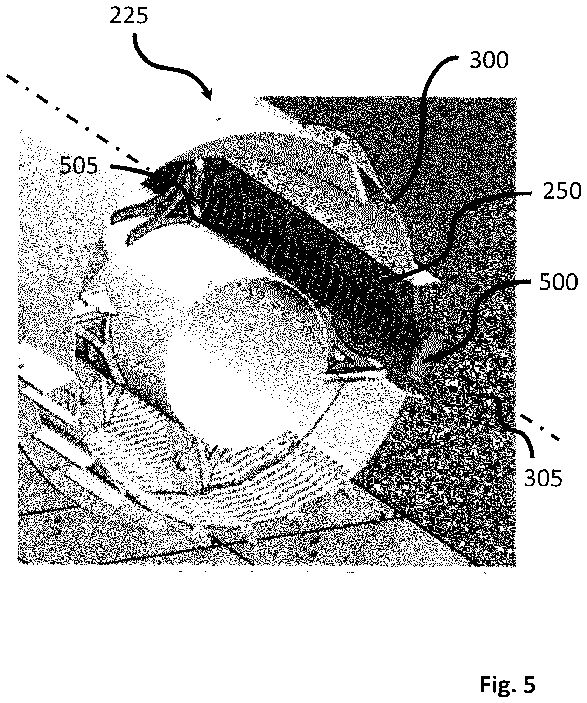

Fig. 5 zeigt das Sensorsystem 250 zum Erfassen von Messwerten M_Betrieb in einem Abscheideorgan 225 einer Erntemaschine 200 gemäß einer Ausführungsform. Die Messwerte M_Betrieb können dabei während des Betriebs der Erntemaschine 200 erfasst werden. Das Sensorsystem 250 umfasst zumindest einen Sensor 500, wobei die Sensorposition SP des zumindest einen Sensors 500 nach einem der vorhergehenden Aspekte bestimmt wurde. Der Sensor 500 ist dabei in die Struktur des Rotormantels 300 integriert sein.

Ferner umfasst der Rotormantel 300 ein Schutzgehäuse 505 zum Schutz des Sensorsystems 250. Beim Bestimmen der Sensorposition SP kann die Position des Schutzgehäuses 505 berücksichtigt werden. Das Schutzgehäuse 505 erstreckt sich entlang der Messlinie 305, die im Wesentlichen parallel zur Rotorachse 235 verläuft. Das Schutzgehäuse 505 kann speziell dazu dienen, das Sensorsystem 250 vor mechanischen Schäden, Verschmutzung oder anderen äußeren Einflüssen zu schützen. Bei dem Schutzgehäuse 250 handelt es sich vorliegend um ein Fallgitter. Wenn das Erntegut durch das Fallgitter fällt, kann es von einem Sensor 500 des Sensorsystems 250 erfasst werden, wodurch eine genaue Messung gewährleistet wird. Bestandteile, die nicht durch den Sensor 500 erfasst werden sollen, können durch das Schutzgehäuse 505 gefiltert und weiter im Abscheideorgan 225 behandelt werden. Der Rotormantel 300 kann hinter dem Schutzgehäuse 505 bzw. dem Fallgitter eine Fallstufe aufweisen. Die Fallstufe kann eine Vertiefung im Rotormantel 300 darstellen, in die das Erntegut fallen kann und dort mit dem Sensor 500 in Berührung kommt.

**Bezugszeichenliste**

| | |
|---|---|
| 100 | Verfahren |
| S1-S2 | Schritte |
| 200 | Erntemaschine |
| 205 | Mähdrescher |
| 210 | Vorsatzgerät |
| 215 | Schrägförderer |
| 220 | Dreschvorrichtung |
| 225 | Abscheideorgan |
| 225A-225I | Abscheidezonen |
| 230 | Rotor |
| 235 | Rotorachse |
| 240 | Fahrerkabine |
| 245 | grafische Benutzerschnittstelle |
| 250 | Sensorsystem |
| 255 | Auswerteeinheit |
| 300 | Rotormantel |
| 305 | Messlinie |
| 310 | Erntegutflusslinie |
| 400 | Abscheidefunktion |
| 405 | Abscheiderate |
| 500 | Sensor |
| 505 | Schutzgehäuse |
| V1-V5 | Verläufe der Abscheidefunktion |
| Smax | maximale Sensitivität |
| Pmax | Position, an der die Abscheidefunktion die |

| | |
|---|---|
| | maximale Sensitivität auweist |
| SP | Sensorposition |
| M | Messwerte |
| VW | Verlustwert |

**Patentansprüche**

1.  Verfahren (100) zum Bestimmen einer Sensorposition (SP) in einem Abscheideorgan (225) einer Erntemaschine (200),
    das Verfahren (100) umfassend:

    Bereitstellen einer Abscheidefunktion (400) zum Ermitteln einer berechneten Abscheidung; und
    Bestimmen einer Sensorposition (SP) für zumindest einen Sensor (500) zum Erfassen einer tatsächlichen Abscheidung,
    indem eine Position (Pmax) im Abscheideorgan (225) bestimmt wird, an der die Abscheidefunktion (400) eine maximale Sensitivität (Smax) aufweist.

2.  Verfahren (100) nach Anspruch 1, wobei das Abscheideorgan (225) einen Rotor (230) und einen Rotormantel (300) umfasst,
    das Verfahren (100) umfassend:

    Bereitstellen einer Messlinie (305), wobei die Messlinie (305) auf dem Rotormantel (300) des Abscheideorgans (225) angeordnet ist; und
    Bestimmen der Sensorposition (SP) des zumindest einen Sensors (500), indem eine Position (Pmax) auf der Messlinie (305) bestimmt wird, an der die Abscheidefunktion (400) eine maximale Sensitivität (Smax) aufweist.

3.  Verfahren (100) nach Anspruch 2,
    wobei der Rotor (230) eine Rotorachse (235) aufweist und die Messlinie (305) im Wesentlichen parallel zur Rotorachse (235) angeordnet ist.

4.  Verfahren (100) nach einem der vorhergehenden Ansprüche,

    wobei der Rotormantel (300) eine Fallstufe aufweist,
    wobei das Verfahren (100) das Bestimmen einer Fallstufenposition ausgehend von der Sensorposition (SP) umfasst, wobei die Fallstufenposition mittels einer Fallfunktion bestimmt wird, wobei die Fallfunktion aus der Abscheidefunktion (400) ermittelt wird.

5.  Verfahren (100) nach Anspruch 4,
    wobei das Verfahren (100) das Bestimmen, ob die Sensorposition (SP) im Rotormantel (300) oder außerhalb des Rotormantels (300) liegt, umfasst.

**6.** Verfahren (100) nach einem der vorhergehenden Ansprüche,
wobei der Rotormantel (300) ein Schutzgehäuse zum Schutz des Sensorsystems (250) umfasst und wobei das Bestimmen der Sensorposition (SP) die Position des Schutzgehäuses (505) berücksichtigt.

**7.** Verfahren (100) nach einem der vorhergehenden Ansprüche,
das Verfahren (100) umfassend:

Bestimmen einer Erntegutflusslinie (310) im Abscheideorgan (225), wobei Erntegut abschnittsweise entlang der Erntegutflusslinie (310) abscheidbar ist;
Bereitstellen der Abscheidefunktion (400) basierend auf der Erntegutflusslinie (310); und
Bestimmen der Sensorposition (SP), indem eine Position (Pmax) auf der Erntegutflusslinie (310) bestimmt wird, an der die Abscheidefunktion (400) eine maximale Sensivität (Smax) aufweist.

**8.** Sensorsystem (250) zum Erfassen von Messwerten (M_Betrieb) in einem Abscheideorgan (225) einer Erntemaschine (200), umfassend:
zumindest einen Sensor (500), wobei die Sensorposition (SP) des zumindest einen Sensors (500) nach einem der vorhergehenden Verfahren bestimmbar ist.

**9.** Erntemaschine (200), umfassend:

ein Abscheideorgan (225); und
ein Sensorsystem (250) nach Anspruch 8.

**10.** Erntemaschine (200) nach Anspruch 9,

wobei das Abscheideorgan (225) einen Rotor (230) und einen Rotormantel (300) umfasst,
wobei der Rotormantel (300) eine Fallstufe umfasst und
wobei der Rotormantel (300) ein Schutzgehäuse (505) zum Schutz des Sensorsystems (250) umfasst.

100

Bereitstellen einer Abscheidefunktion
zum Ermitteln einer berechneten Abscheidung.

S1

Bestimmen einer Sensorposition
für zumindest einen Sensor zum Erfassen einer
tatsächlichen Abscheidung,
indem eine Position im Abscheideorgan bestimmt wird,
an der die Abscheidefunktion eine maximale Sensitivität
aufweist.

S2

**Fig. 1**

Fig. 2

Fig. 3

Fig. 4

**Fig. 5**

Europäisches
Patentamt

European
Patent Office

Office européen
des brevets

## EUROPÄISCHER RECHERCHENBERICHT

Nummer der Anmeldung

EP 25 19 3743

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 595 435 A1 (CLAAS SELBSTFAHR ERNTEMASCH [DE]) 16. November 2005 (2005-11-16) | 8-10 | INV. A01D41/127 A01F7/06 |
| A | * Abbildungen 1-3 * ----- | 1-7 | |
| X | US 4 360 998 A (SOMES RICHARD K) 30. November 1982 (1982-11-30) | 8-10 | |
| A | * Abbildungen 1-2 * ----- | 1-7 | |
| X,D | EP 4 151 072 A1 (CLAAS SELBSTFAHRENDE ERNTEMASCHINEN GMBH [DE]) 22. März 2023 (2023-03-22) | 8-10 | |
| A | * Abbildungen 1-4 * ----- | 1-7 | |
| X | EP 1 321 023 A1 (CLAAS SELBSTFAHR ERNTEMASCH [DE]) 25. Juni 2003 (2003-06-25) | 8-10 | |
| A | * Abbildungen 1-2 * ----- | 1-7 | |

RECHERCHIERTE
SACHGEBIETE (IPC)

A01D
A01F

Der vorliegende Recherchenbericht wurde für alle Patentansprüche erstellt

| Recherchenort | Abschlußdatum der Recherche | Prüfer |
|---|---|---|
| München | 17. Dezember 2025 | Karstens, Thede |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 25 19 3743

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-12-2025

| Im Recherchenbericht angeführtes Patentdokument | Datum der Veröffentlichung | Mitglied(er) der Patentfamilie | Datum der Veröffentlichung |
|---|---|---|---|
| EP 1595435 A1 | 16-11-2005 | AT E517543 T1<br>EP 1595435 A1<br>UA 86747 C2 | 15-08-2011<br>16-11-2005<br>25-05-2009 |
| US 4360998 A | 30-11-1982 | KEINE | |
| EP 4151072 A1 | 22-03-2023 | DE 102021124214 A1<br>EP 4151072 A1 | 23-03-2023<br>22-03-2023 |
| EP 1321023 A1 | 25-06-2003 | AT E423453 T1<br>DE 10162354 A1<br>EP 1321023 A1<br>US 2003199291 A1 | 15-03-2009<br>03-07-2003<br>25-06-2003<br>23-10-2003 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 4151072 A1